## Europäisches Patentamt

## European Patent Office

## Office européen des brevets

(19)

(11) Veröffentlichungsnummer: **0 228 705**
**B1**

(12) **EUROPÄISCHE PATENTSCHRIFT**

(45) Veröffentlichungstag der Patentschrift:
26.07.89

(21) Anmeldenummer: 86118073.5

(22) Anmeldetag: 24.12.86

(51) Int. Cl.⁴: **B 29 C 33/60** // B29K75/00

(54) Trenmittel für Polyurethanformteile.

(30) Priorität: 09.01.86 DE 3600368

(43) Veröffentlichungstag der Anmeldung:
15.07.87 Patentblatt 87/29

(45) Bekanntmachung des Hinweises auf die Patenterteilung:
26.07.89 Patentblatt 89/30

(84) Benannte Vertragsstaaten:
BE DE ES FR GB IT NL

(56) Entgegenhaltungen:
DE-A- 2 702 930
DE-A- 2 854 606
US-A- 4 038 088

DERWENT JAPANESE PATENTS REPORT, Section Chemical, Woche 33, 1972, Zusammenfassung Nr. 53283T, Derwent Publications Ltd; & JP-B-47 031 690 (KOSEI K.K.) 15-08-1972
R. GÄCHTER, H. MÜLLER: "Taschenbuch der Kunststoff-Additive", 1979, Seite 238, Carl Hanser Verlag, München, Wien

(73) Patentinhaber: Th. Goldschmidt AG,
Goldschmidtstrasse 100 Postfach 101461,
D-4300 Essen 1 (DE)

(72) Erfinder: Lammerting, Helmut, Schweerstrasse 11A,
D-5812 Herbede (DE)

**Beschreibung**

Die Erfindung betrifft ein auf die Forminnenwand aufzubringendes Trennmittel für die Herstellung von Formteilen auf Polyurethanbasis mit einem Gehalt an Alkalisalzen von Fettsäuren.

Bei der Herstellung von Formteilen auf Polyurethanbasis durch Reaktion von Polyisocyanaten mit Polyolen in einer geschlossenen Form ist es zur Vermeidung des Anhaftens der gebildeten Polyurethanformteile notwendig, Trennmittel zu verwenden. Man unterscheidet dabei interne Trennmittel, die dem aus Polyisocyanat und Polyol bestehenden Reaktionsgemisch zugesetzt und gegebenenfalls reaktiv eingebaut werden, und externe Trennmittel, welche auf die Innenwandungen der geöffneten Form vor der Reaktion der Polyurethan bildenden Komponente aufgebracht werden. Dabei ist es durchaus üblich, sowohl interne als auch externe Trennmittel nebeneinander zu verwenden. Die vorliegende Erfindung betrifft externe Trennmittel.

Die externen Trennmittel werden meist in Form einer Lösung oder einer Dispersion verwendet, wobei der wirksame Bestandteil der Trennmittel Wachse, Paraffine, Fettsäureester, Fettsäureamide, Silicone oder Salze höherer Fettsäuren sind.

In der DE-AS 2 012 514 ist ein Trennmittel zum Verhindern des Anhaftens von Integralformteilen aus Polyurethan an Formen beschrieben, welches dadurch gekennzeichnet ist, daß es 0,5 bis 1,5 Gew.-% Aluminiumtristearat enthält, daß das Lösungsmittel ein flüssiger chlorierter Kohlenwasserstoff ist und daß dieser Lösung 0,2 bis 0,8 Gew.-% Magnesiumoleat zugegeben sind. Die Verwendung von Metallsalzen ungesättigter oder gesättiger Fettsäuren als Trennmittel ist in einer großen Zahl weiterer Veröffentlichungen beschrieben, wobei nur beispielsweise auf die DE-OS 2 702 930, DE-OS 2 637 919 und die US-PS 4 038 088 hingewiesen wird. Dabei haben sich ganz allgemein gesättigte oder ungesättigte Carbonsäuren mit 10 bis 22 Kohlenstoffatomen als brauchbar gezeigt. Diese Carbonsäuren, welche auch in Form ihrer Alkali-, Erdalkali-, Zink- oder Aluminiumsalze verwendet werden, können in chlorierten Kohlenwasserstoffen oder in Alkohol/Wasser-Gemischen gelöst werden. Aus JP-B-47 031 690 ist bekannt, Isostearinsäure(ester) oder (Alkali)metallverbindungen der Isostearinsäure als internes Verarbeitungshilfsmittel für Ethylen-Vinylacetat-Copolymere zu verwenden. In DE-A-2 854 606 ist der Zusatz von Isostearinsäure oder flüssigen Estern bzw. von als Schmiermitteln brauchbaren Schwermetallsalzen der Isostearinsäure als internes Zusatzmittel für PVC-Pulver beschrieben.

Es hat sich jedoch gezeigt, daß die aus dem Stand der Technik bekannten Trennmittel nicht alle Anforderungen erfüllen können. Selbstverständlich ist zunächst, daß die Trennwirkung der Produkte hoch sein soll. Neben dieser Voraussetzung sollen die wirksamen Bestandteile der Trennmittel möglichst in Wasser/Alkohol-Gemischen mit hohem Wassergehalt löslich sein, um die Entflammbarkeit des Lösungsmittelgemisches herabzusetzen und die Umweltbelastung mit Alkohol niedrig zu halten. Die Trennmittel sollen möglichst niedrigviskos sein, damit sie auf die Forminnenwand aufgespritzt werden können, um dort zu möglichst dünnen, gleichmäßigen Filmen ohne Tropfenbildung zu verlaufen. Die sich dabei bildenden dünnen Filme sollen eine gleichmäßige und dichte Schicht ausbilden. Der Trennmittelfilm soll gut polierbar sein und auf dem gebildeten Polyurethanformteil keine Rückstände aufbauen. Die Oberfläche der entformten Teile darf keine Poren oder Sinkmarkierungen aufweisen. Die Trennmittel sollen sowohl von den Formteilen sowie von den Forminnenwandungen mit wäßrigen Waschmittellösungen abwaschbar sein.

Bei den Trennmitteln des Standes der Technik ist jedoch häufig zu beobachten, daß sie Wasser/Alkohol-Gemische stark verdicken oder daß zur Herstellung von Lösungen organische Lösungsmittel notwendig sind. Hohe Viskosität beeinträchtigt aber die Ausbildung dünner Trennmittelschichten sowie den guten Verlauf der aufgebrachten Trennmittel. Häufig wird sowohl auf die Forminnenwandung wie auf den gebildeten Formteilen eine Rückstandsbildung in Form weißer kristalliner Abscheidungen beobachtet, wobei auch die Ausbildung einwandfreier Oberflächen der entformten Teile beeinträchtigt sein kann.

Es besteht deshalb noch immer ein Bedarf an externen Trennmitteln für die Herstellung von Formteilen auf Polyurethanbasis, welche alle vorgenannten Forderungen erfüllen. Dabei ist es schwierig, die Wirkung und Eignung anderer Substanzen als Trennmittel für den vorgenannten Zweck vorherzusagen, da die Eigenschaftsanforderung zu komplex und die Wirkungsweise der Produkte noch nicht völlig aufgeklärt ist. Die Auswahl geeigneter Produkte wird außerdem dadurch eingeschränkt, daß die Trennmittel die Reaktion der Polyisocyanate mit den Polyolen nicht beeinträchtigen dürfen.

Der Erfindung liegt die überraschende Erkenntnis zugrunde, daß ein externes Trennmittel die geforderte Kombination von Eigenschaften aufweist, wenn es erfindungsgemäß als Alkalisalz von Fettsäuren solche mit einem Gehalt von mindestens 70 Gew.-% Isostearinsäure enthält.

Isostearinsäure ist die im Handel übliche Bezeichnung für 16-Methyl-heptadecansäure.

Die wäßrig-alkalische Lösung der Alkalisalze der Isostearinsäure ist niedrigviskos und verläuft auf den Forminnenwandungen zu dünnen, glatten, aber gleichmäßig dichten Schichten. Vorzugsweise verwendet man als Alkalisalz das Natriumsalz der Isostearinsäure. Es hat sich dabei als besonders günstig in bezug auf die Trenneigenschaften herausgestellt, wenn das Alkalisalz der Isostearinsäure bis zu 10 Gew.-%, vorzugsweise bis zu 5 Gew.-%, insbesondere bis zu 3 Gew.-% freie Isostearinsäure enthält. Der geringe Gehalt freier Isostearinsäure begünstigt die Trenneigenschaften wie auch die sichere Bildung einwandfreier und sauberer Oberflächen.

Die besten Trennergebnisse werden erhalten, wenn man die Alkalisalze reiner Isostearinsäure verwendet. Geringe Mengen von bis zu 30 Gew.-% Salze natürlicher Fettsäuren, insbesondere mit 14 bis 20, vorzugsweise 16 bis 18 Kohlenstoffatomen können bei geringer Verminderung des Trennvermögens toleriert werden. Ein höherer Gehalt an Salzen natürlicher Fettsäuren ist jedoch zu vermeiden, da sich die Trenneigenschaften und die Eigenschaften des Filmes auf der Forminnenwandung verschlechtern.

Besonders bevorzugt ist ein erfindungsgemäßes Trennmittel, das aus 2 - 15 Gew.-%, vorzugsweise 2 - 5 Gew.-%, Alkalisalzen von Fettsäuren mit einem Gehalt von $\geq$ 70 Gew.-%, bezogen auf Fettsäuren, Isostearinsäure, 0 - 5 Gew.-% eines Verlaufmittels, 0 - 0,5 Gew.-% eines Netzmittels, Rest auf 100 Gew.-% eines Gemisches aus Wasser und Alkohol im Gewichtsverhältnis 80 : 20 bis 60 : 40 mit Ethanol oder Propanol als Alkohol besteht.

Als Verlaufmittel eignen sich Alkohole mit 4 - 6 Kohlenstoffatomen, vorzugsweise Butanol. Bevorzugt ist ein Trennmittel mit einem Gehalt von 2 - 5 Gew.-% Butanol. Als Verlaufmittel mit trennverstärkenden Eigenschaften können vorteilhaft auch wasserlösliche Polyoxyalkylen-Polysiloxan-Blockmischpolymerisate eingesetzt werden.

Die Benetzung der Forminnenwand durch das erfindungsgemäße Trennmittel kann durch den Zusatz geringer Mengen eines wasserlöslichen Netzmittels verbessert werden. Vorzugsweise soll das erfindungsgemäße Trennmittel 0,1 bis 0,5 Gew.-% eines solchen Netzmittels enthalten. Als Netzmittel kommen insbesondere die nichtionogenen Anlagerungsprodukte von Ethylenoxid an aliphatische Alkohole oder Alkylphenole in Frage. Geeignete aliphatische, gegebenenfalls verzweigte, Alkohole sind solche mit 6 bis 18 C-Atomen, insbesondere mit 8 bis 13 C-Atomen. Als Alkylphenole kommen insbesondere Octyl- oder Nonylphenole in Frage. Weitere besonders geeignete Netzmittel sind die Anlagerungsprodukte von Ethylenoxid an perfluorierte Alkohole oder die wasserlöslichen Salze von perfluorierten Carbonsäuren. Derartige Netzmittel sind dem Fachmann bekannt und in großer Zahl im Handel erhältlich.

Beispiele von erfindungsgemäßen Trennmitteln können der folgenden Tabelle entnommen werden.

TABELLE

| Inhaltsstoffe | Trennmittel (Gehalt in Gew.-%) | | | | | |
|---|---|---|---|---|---|---|
| | 1 | 2 | 3 | 4 | 5 | 6 |
| Natriumsalz der Isostea- rinsäure | 4,0 | 4,0 | 3,5 | 4,0 | 4,0 | 4,0 |
| Wasser | 70,0 | 70,0 | 75,0 | 75,0 | 70,0 | 70,0 |
| Ethanol | — | 20,8 | — | — | — | — |
| Isopropanol | 20,8 | — | 18,3 | 20,7 | 20,8 | 20,8 |
| Butanol | 5,0 | 5,0 | 3,0 | — | 5,0 | 5,0 |
| Netzmittel 1 | 0,2 | 0,2 | 0,2 | 0,3 | — | — |
| Netzmittel 2 | — | — | — | — | 0,2 | — |
| Netzmittel 3 | — | — | — | — | — | 0,3 |

Das Netzmittel 1 ist das Alkalisalz einer Perfluorcarbonsäure. Das Netzmittel 2 ist ein handelsübliches Tensid auf der Basis siliciumorganischer Verbindungen. Das Netzmittel 3 ist das Natriumsalz der Dodecylbenzolsulfonsäure.

Die erfindungsgemäßen Trennmittel erfüllen die eingangs gestellten Anforderungen und zeigen die geforderte Eigenschaftskombination. Dabei war es nicht vorherzusehen, daß die Alkalisalze der Isostearinsäure sich in dieser Weise von den Eigenschaften der bisher verwendeten geradkettigen Fettsäure unterscheiden würden.

In dem folgenden Beispiel wird die gute Brauchbarkeit der erfindungsgemäßen Trennmittel näher erläutert:

Zur Überprüfung der Trennkräfte wird eine Testform aus Aluminium verwendet, die mit einem separaten Deckel mit Schraubzwingen geschlossen werden kann. Die Form wird auf eine Temperatur von 60°C vorgewärmt. Die zu prüfende Trennmittelzubereitung wird mit einem Airless-Gerät auf die Innenfläche der Testform und des Deckels gesprüht, so daß ein zusammenhängender Film entsteht. Nach ca. 30 Sekunden ist dieser Film griffest aufgetrocknet. Das Isocyanat/Polyol-Reaktionsgemisch wird wie folgt hergestellt: Für die Polyolkomponente werden 100 Gew.-Teile eines Polyetherpolyols mit der OH-Zahl 27, das durch Anlagerung von Propylenoxid an Trimethylolpropan und anschließendes Anlagern von Ethylenoxid hergestellt worden war, mit 28 Gew.-Teilen Ethylenglykol, 0,35 Gew.-Teilen Triethylendiamin, 0,02 Gew.-Teilen Dibutylzinndilaurat vermischt. Als Isocyanatkomponente wird ein durch Umsetzung von 4,4-Diisocyanatodiphenylmethan mit Tripropylenglykol erhaltenes Produkt mit einem NCO-Gehalt von 23% verwendet. Jeweils 100 Gew.-Teile der Polyolkomponente werden mit 127 Gew.-Teilen der Isocyanatkomponente durch intensives Rühren mit einem Laborrührer mit 2500 Umdrehungen in 7 Sekunden vermischt. Das noch flüssig vorliegende Reaktionsgemisch wird in die bereits vorbereitete Aluminiumform gegossen, der Deckel aufgelegt und mit Schraubzwingen verschlossen. Nach einer Standzeit von 4 Minuten wird der Deckel entfernt. Es werden die hierfür notwendigen Zugkräfte mit einer Federwaage gemessen.

Der Blindversuch wurde ohne Trennmittel durchgeführt. Die Form mußte nach der Verschäumung gewaltsam geöffnet werden, wobei der Schaumkörper zerstört wurde. Die Vergleichssubstanzen A und B waren Produkte des Handels. Das Produkt B besteht aus einer 4 gew.%igen Na-Myristinatlösung in 75 Gew.-% Wasser und 21 Gew.-% Isopropanol.

| Trennmittel | Trennkraft [N/100 cm²] Formschaumoberfläche | |
|---|---|---|
| ohne | keine Trennung möglich | |
| 1 | 5 | |
| 2 | 4 | |
| 3 | 4 | einwandfrei |
| 4 | 5 | |
| 5 | 6 | |
| 6 | 5 | |
| A | 20 | Markierungen, |
| B | 10 | weiße Rückstände |

**Patentansprüche**

1. Trennmittel für Polyurethanformteile auf der Basis einer Lösung der Alkalisalze von Fettsäuren mit 14 bis 20 Kohlenstoffatomen in Wasser/Alkohol-Gemischen, dadurch gekennzeichnet, daß es als Alkalisalze von Fettsäuren solche mit einem Gehalt von mindestens 70 Gew.-% 16-Methyl-heptadecansäure enthält.

2. Trennmittel nach Anspruch 1, dadurch gekennzeichnet, daß es als Alkalisalze von Fettsäuren das Natriumsalz der 16-Methyl-heptadecansäure enthält.

3. Trennmittel nach Anspruch 1 oder 2, dadurch gekennzeichnet, daß es, bezogen auf Alkalisalze von Fettsäuren, bis zu 10 Gew.-% freie Fettsäure enthält.

4. Trennmittel nach einem oder mehreren der vorhergehenden Ansprüche, dadurch gekennzeichnet, daß es aus 2 - 15 Gew.-% Alkalisalzen von Fettsäuren mit einem Gehalt von ≧ 70 Gew.-%, bezogen auf Fettsäuren, 16-Methyl-heptadecansäure, 0 - 5 Gew.-% eines Verlaufmittels, 0 - 0,5 Gew.-% eines Netzmittels, Rest auf 100 Gew.-% eines Gemisches aus Wasser und Alkohol im Gewichtsverhältnis 80 : 20 bis 60 : 40 mit Ethanol oder Propanol als Alkohol besteht.

**Claims**

1. Release agent for polyurethane mouldings based on a solution of the alkali metal salts of fatty acids having 14 to 20 carbon atoms in water/alcohol mixtures, characterized in that it contains, as the alkali metal salts of fatty acids, those having a content of at least 70% by weight of 16-methylheptadecanoic acid.

2. Release agent according to Claim 1, characterized in that it contains, as the alkali metal salts of fatty acids, the sodium salt of 16-methylheptadecanoic acid.

3. Release agent according to Claim 1 or 2, characterized in that it contains up to 10% by weight of free fatty acid, relative to alkali metal salts of fatty acids.

4. Release agent according to one or more of the preceding claims, characterized in that it consists of 2 - 15% by weight of alkali metal salts of fatty acids having a content of ≧ 70% by weight, relative to fatty acids, of 16-methylheptadecanoic acid, 0 - 5% by weight of a flow-control agent and 0 - 0.5% by weight of a wetting agent, the remainder to 100% by weight being a mixture of water and alcohol in a weight ratio of from 80 : 20 to 60 : 40 with ethanol or propanol as the alcohol.

**Revendications**

1. Agent de démoulage pour pièces moulées en polyuréthanne, à base d'une solution de sels de métaux alcalins d'acides gras ayant de 14 à 20 atomes de carbone dans des mélanges eau/alcool, caractérisé en ce qu'il contient en tant que sels de métaux alcalins d'acides gras ceux ayant une teneur d'au moins 70% en poids en acide 16-méthyl-heptadécanoïque.

2. Agent de démoulage selon la revendication 1, caractérisé en ce qu'il contient comme sels de métaux alcalins d'acides gras le sel de sodium de l'acide 16-méthyl-heptadécanoïque.

3. Agent de démoulage selon la revendication 1 ou 2, caractérisé en ce qu'il contient, par rapport aux sels de métaux alcalins d'acides gras, jusqu'à 10% en poids d'acide gras libre.

4. Agent de démoulage selon l'une ou plusieurs des revendications précédentes, caractérisé en ce qu'il est constitué de 2 à 15% en poids de sels de métaux alcalins d'acides gras ayant une teneur ≧ 70% en poids, par rapport aux acides gras, d'acide 16-méthyl-heptadécanoïque, de 0 à 5% en poids d'un agent d'étalement, de 0 à 0,5% en poids d'un mouillant, le reste, jusqu'à 100% en poids, étant constitué d'un mélange d'eau et d'alcool selon un rapport pondéral de 80 : 20 à 60 : 40, l'alcool étant l'éthanol ou le propanol.